# EUROPÄISCHE PATENTANMELDUNG

(11) **EP 3 613 485 A1**
(43) Veröffentlichungstag der Anmeldung: **26.02.2020**
(21) Anmeldenummer: 19000244.4
(22) Anmeldetag: 17.05.2019
(51) Int. Cl.: B01D 3/14

(54) **KOLONNE MIT TRENNWAND**

(30) Priorität: 24.08.2018 DE 102018006707
(71) Anmelder: JULIUS MONTZ GmbH, D-40723 Hilden (DE)
(72) Erfinder: Schulz, Robin, 59174 Kamen (DE); Jansen, Helmut, 41542 Dormagen (DE); Zich, Egon, 42799 Leichlingen (DE); Hugen, Thorsten Erik Alexander, 45239 Essen (DE)
(74) Vertreter: Cohausz Hannig Borkowski Wißgott

(57) **Zusammenfassung**

Die Erfindung betrifft eine Kolonne zum Durchführen thermischer Trennungen und/oder chemischer Reaktionen mit einer senkrechten Kolonnenaußenwand, die einen Innenraum umgibt, der durch mindestens eine senkrechte Trennwand in mindestens zwei Bereiche unterteilt ist, wobei die Trennwand aus flachen Trennwandelementen zusammengesetzt ist, wobei die Trennwandelemente aus wärmeisolierendem/n Material/Materialien bestehen oder mit wärmeisolierendem/n Material/Materialien bedeckt sind.

## Beschreibung

Die Erfindung betrifft eine Kolonne zum Durchführen thermischer Trennungen und/oder chemischer Reaktionen mit einer senkrechten Kolonnenaußenwand, die einen Innenraum umgibt, der durch mindestens eine senkrechte Trennwand in mindestens zwei Bereiche unterteilt ist, wobei die Trennwand aus flachen Trennwandelementen zusammengesetzt ist.

Kolonnen mit senkrechter Trennwand sind u.a. aus der EP 1 390 111 B1, DE 10 2015 014 676 A1 und DE 10 2015 014 708 A1 bekannt. Es gibt Anwendungsfälle von Trennwandkolonnen, bei denen zwischen den beiden Seiten der Trennwand (Vorfraktionierer und Hauptkolonne) ein Temperaturgradient vorhanden ist. Dieser Temperaturgradient führt zu einem Wärmeübertrag von der einen zur anderen Seite. Dadurch verdampft auf der "kalten" Seite Flüssigkeit und auf der "heißen" Seite kondensiert Dampf. Beides wirkt sich nachteilig auf den Prozess aus.

Aufgabe der Erfindung ist es, bei einer mindestens eine senkrechte Trennwand aufweisenden Kolonne eine Wärmeübertragung von einer Seite der Trennwand zur anderen Seite zu verringern.

Diese Aufgabe wird erfindungsgemäß dadurch gelöst, dass die Trennwandelemente aus wärmeisolierendem/n Material/Materialien bestehen oder mit wärmeisolierendem/n Material/Materialien bedeckt sind.

Eine senkrechte Trennwand in einer insbesondere zylindrischen Kolonne unterteilt den Kolonneninnenraum in mindestens zwei Raumbereiche, in denen unterschiedlich hohe Temperaturen entstehen können, insbesondere im Bereich der Stoffaustauschpakete. Eine Übertragung der Temperaturen von einer Trennwandseite zur anderen kann zu einer Verdampfung auf der einen Seite und zu einer Kondensation auf der anderen Seite führen, so dass es zu Störungen der Funktion und zu einer schlechteren Energiebilanz kommt. Dies wird durch die wärmeisolierenden Materialien der Trennwand wesentlich verringert.

Eine einfache und effizient wirksame Konstruktion ist geschaffen, wenn die Trennwandelemente mit wärmeisolierendem/n Material/Materialien einseitig oder beidseitig verkleidet sind. Vorzugsweise bestehen die Trennwandelemente und/oder deren bedeckende Teile aus Kunststoff und/oder Keramik. Ferner ist von Vorteil, wenn der Kunststoff Karbonfasern zur Verstärkung aufweist. Auch wird vorgeschlagen, dass der Kunststoff ein Polytetrafluorethylen (PTFE) ist.

Die Trennwandelemente sind vorzugsweise durch Schraubverbindungen und/oder durch Steckverbindungen miteinander verbunden. Die Trennwandelemente sind vorzugsweise mit metallischen Elementen ummantelt und in den Raumbereichen neben der Trennwand befinden sich Stoffaustauschpakete.

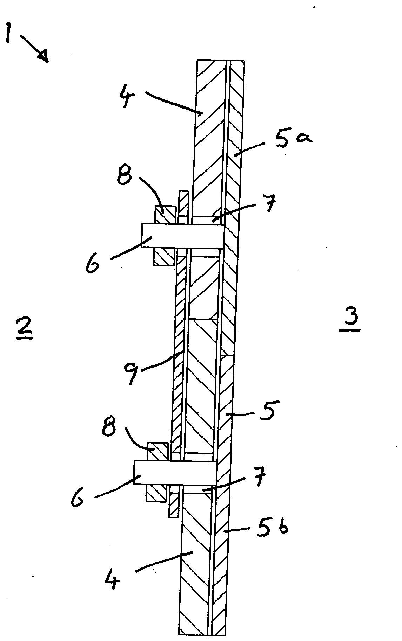

Ein Ausführungsbeispiel einer erfindungsgemäßen Trennwand ist in der Zeichnung in einem senkrechten Schnitt in einem Ausschnitt dargestellt. Im Folgenden werden dieses Ausführungsbeispiel und weitere Ausführungen beschrieben.

Eine zylindrische Kolonne mit senkrechter Zylinderachse weist eine zylindrische Kolonnenaußenwand aus Blech auf und ist über zumindest einen Bereich durch mindestens eine senkrechte Trennwand 1 in zwei Räume 2, 3 aufgeteilt, in denen sich Stoffaustauschpakete befinden, die dafür sorgen, dass es zu thermischen Trennungen und/oder chemischen Reaktionen kommt zwischen der von oben einströmenden Flüssigkeit und von unten einströmendem Gas. Die Trennwand weist in dem in der Zeichnung dargestellten Ausführungsbeispiel senkrecht tragende Elemente 4 aus Blech auf, die übereinander angeordnet sind und stirnseitig aneinandergeschweißt sein können.

Auf einer Seitenfläche sind die tragenden, scheibenförmigen Trennwandelemente 4 mit einer einseitigen Verkleidung 5 aus Flächenteilen 5a, 5b bedeckt, die aus einem wärmeisolierenden Material bestehen, insbesondere aus Kunststoff (z. B. PTFE) und/oder Keramik, vorzugsweise mit Karbonfasern zur Verstärkung. Hierbei stehen an den Flächenteilen 5a, 5b seitlich Gewindebolzen 6 vor, die durch Öffnungen 7 in den Trennwandelementen 4 hindurchreichen und auf ihren freien Enden Muttern 8 tragen. Dabei kann zwischen den Muttern und den Trennwandelementen 4 eine senkrechte Gegenplatte 9 angeordnet sein.

Alternativ bestehen die Trennwandelemente 4 selber aus wärmeisolierendem/n Material/Materialien und ferner können die Trennwandelemente durch Steckverbindungen miteinander verbunden sein. Ein zusätzlicher Schutz der Trennwandelemente wird erreicht, wenn die Trennwandelemente mit metallischen Elementen ummantelt sind.

Ein Ausführungsbeispiel einer isolierten Trennwand wird im Folgenden beschrieben:
Bei einer Trennwand aus Edelstahl mit einer Dicke von 1,5 mm ergibt sich ein Wärmestrom zwischen den beiden Seiten der Trennwand von 592 kW. Wird auf dieses 1,5 mm starke Edelstahlblech eine Isolierung mit 5 mm PTFE aufgebracht, sinkt der Wärmestrom auf 14,4 kW. Dies entspricht einer Verringerung um 97,5 %. Dabei ist entscheidend, dass die Wärmeleitung von Edelstählen bei 15 W / (m K) liegt und die Wärmeleitung von PTFE bei 0,25 W / (m K) liegt. Diese Betrachtung gilt für die Annahme, dass auf beiden Seiten der Trennwand vor allem der Dampf für die Wärmeübertragung verantwortlich ist. Daher ist der Wärmeübergangskoeffizient der Gasphasen mit 5000 W / (m² K) angenommen. Bei der Annahme, dass beidseitig der Trennwand Flüssigkeit für die übertragene Wärme verantwortlich ist und mit einem Wärmeübergangskoeffizienten von 500 W / (m² K) gerechnet wird, ergibt sich ein Wärmestrom von 72 kW ohne Isolierung und von 12,2 kW mit Isolierung. Dies entspricht immer noch einer Einsparung von 83,1 %.

## Patentansprüche

1. Kolonne zum Durchführen thermischer Trennungen und/oder chemischer Reaktionen mit einer senkrechten Kolonnenaußenwand, die einen Innenraum umgibt, der durch mindestens eine senkrechte Trennwand in mindestens zwei Bereiche unterteilt ist, wobei die Trennwand aus flachen Trennwandelementen (4) zusammengesetzt ist, **dadurch gekennzeichnet, dass** die Trennwandelemente (4) aus wärmeisolierendem/n Material/Materialien bestehen oder mit wärmeisolierendem/n Material/Materialien (5) bedeckt sind.

2. Kolonne nach Anspruch 1, **dadurch gekennzeichnet, dass** die Trennwandelemente (4) mit wärmeisolierendem/n Material/Materialien (5) einseitig oder beidseitig verkleidet sind.

3. Kolonne nach Anspruch 1 oder 2, **dadurch gekennzeichnet, dass** die Trennwandelemente (4) und/oder deren bedeckende Teile aus Kunststoff und/oder Keramik bestehen.

4. Kolonne nach Anspruch 3, **dadurch gekennzeichnet, dass** der Kunststoff Karbonfasern zur Verstärkung aufweist.

5. Kolonne nach Anspruch 3 oder 4, **dadurch gekennzeichnet, dass** der Kunststoff ein Polytetrafluorethylen (PTFE) ist.

6. Kolonne nach einem der vorherigen Ansprüche, **dadurch gekennzeichnet, dass** die Trennwandelemente (4) durch Schraubverbindungen miteinander verbunden sind.

7. Kolonne nach einem der vorherigen Ansprüche, **dadurch gekennzeichnet, dass** die Trennwandelemente (4) durch Steckverbindungen miteinander verbunden sind.

8. Kolonne nach einem der vorherigen Ansprüche, **dadurch gekennzeichnet, dass** die Trennwandelemente (4) mit metallischen Elementen ummantelt sind.

9. Kolonne nach einem der vorherigen Ansprüche, **dadurch gekennzeichnet, dass** in den Raumbereichen neben der Trennwand sich Stoffaustauschpakete befinden.
